# FASCICULE DE BREVET EUROPEEN

(11) **EP 0 982 525 B1**
(45) Date de publication et mention de la délivrance du brevet: **18.12.2002**
(21) Numéro de dépôt: 99402102.0
(22) Date de dépôt: 23.08.1999
(51) Int. Cl.: F16L 37/084

(54) **Raccord encliquetable monocorps.**
Einteilige Schnappkupplung
One-piece snap coupling

(30) Priorité: 25.08.1998 FR 9810697
(43) Date de publication de la demande: 01.03.2000
(73) Titulaire: NOBEL PLASTIQUES, 92000 Nanterre (FR)
(72) Inventeur: Jung, Stéphane, 51300 Vitry-Le-Francois (FR); Paquis, Yvon, 51300 Vitry-Le-Francois (FR); Moulet, Michel, 51300 Loisy-sur-Marne (FR)
(74) Mandataire: Bertrand, Didier

(56) Documents cités:
- EP-A- 0 530 485
- EP-A- 0 545 598
- EP-A- 0 605 801
- WO-A-98/00663
- FR-A- 2 063 800
- FR-A- 2 641 843
- FR-A- 2 753 774

## Description

La présente invention concerne un raccord encliquetable femelle destiné à coopérer avec un embout d'accrochage mâle à collerette.

Il est usuel, notamment dans l'industrie automobile, d'utiliser des raccords encliquetables pour réaliser la connexion rapide et démontable d'un élément de circuit de fluide (par exemple carburant, huile ou eau) à un autre élément de circuit. De façon sensiblement normalisée, l'industrie utilise des embouts mâles comportant un canon cylindrique entouré d'une collerette, et les raccords femelles comportent une cavité cylindrique à gradins destinée à recevoir au moins l'extrémité du canon et un verrou élastique destiné à venir bloquer l'arrière de la collerette une fois que celle-ci est en place. Des joints toriques assurent l'étanchéité.

Dans la plupart des raccords commercialisés, le corps du raccord, généralement en thermoplastique moulé, le verrou, le plus souvent également en thermoplastique moulé ou éventuellement en métal, et les joints, généralement en élastomère, sont constitués de pièces rapportées assemblées, ce qui alourdit la fabrication et en grève le prix. C'est le cas par exemple du raccord connu par le document FR 2 753 774 A, dont le verrou est constitué d'une bague sensiblement indéformable à coulissement radial entre une position, excentrée, de blocage et une position, centrée, d'escamotage, des moyens élastiques permettant le rappel de la bague de la position escamotée à sa position excentrée. C'est aussi le cas du raccord connu par le document EP 0 605 801 A, dont le verrou est constitué d'une pièce séparée en ovale ou losange élastiquement déformable dont certaines parties viennent, à l'état de repos, derrière la collerette et peuvent, lorsqu'une pression s'exerce sur elles, s'écarter radialement pour laisser passer la collerette. Dans une variante commercialisée, la pièce séparée en ovale est moulée d'une pièce avec le corps à l'arrière duquel elle est reliée par deux bras. Une telle disposition s'avère assez fragile, et la déformation de l'ovale n'est pas facile à contrôler et risque d'entraîner la déformation permanente, voire la destruction, des bras de liaison. Dans le cas du document FR 2063800, c'est une lame métallique rapportée, assemblée mécaniquement au corps, qui forme le verrou, lequel est guidé dans des glissières du corps dont le moulage s'avère délicat.

Le but de l'invention est de proposer un raccord permettant, comme les raccords antérieurs, plusieurs démontages et remontages manuels sur des embouts à collerette, la réalisation d'une liaison étanche avec ceux-ci, résistant à l'arrachement, résistant aux fluides transportés et à l'environnement (température), mais ne présentant pas les inconvénients précités.

L'invention atteint son but grâce à un raccord encliquetable tel que défini dans la revendication 1 annexée. Ainsi, le raccord comporte un corps à cavité cylindrique à gradins destinée à recevoir au moins l'extrémité du canon et un verrou élastique destiné à venir bloquer l'arrière de la collerette une fois que celle-ci est en place, ainsi qu'au moins un joint annulaire assurant l'étanchéité, le verrou étant constitué d'un anneau sensiblement indéformable à débattement radial entre une position, excentrée, de blocage et une position, centrée, d'escamotage, des moyens élastiques permettant le rappel de l'anneau de la position escamotée à sa position excentrée; l'anneau et le corps sont monobloc (et de préférence venu de moulage), l'anneau étant maintenu transversalement à l'arrière du corps par une potence déformable permettant le débattement radial de l'anneau entre ses deux positions. Par ensemble monobloc, on entend un ensemble sans assemblage mécanique de pièces. Dans une forme préférée, l'ensemble monobloc est réalisé d'une seule pièce. L'anneau et le corps sont ainsi réalisés en une fois, de préférence par moulage par injection d'une matière thermoplastique appropriée ou une technique analogue, ce qui simplifie la fabrication, et la résistance de l'ensemble n'est pas entamée car il est facile de dimensionner la potence pour obtenir la flexibilité nécessaire au débattement de l'anneau sans compromettre sa solidité. Dans des formes secondaires de réalisation, l'anneau peut être rendu monobloc avec le corps par soudure ou surmoulage, c'est-à-dire par des liaisons chimiques ou moléculaires, mais toujours sans assemblage mécanique.

Le corps comprend, également d'une pièce (de préférence venue de moulage), une butée à crochet pour l'anneau, maintenue à l'arrière du corps par un bras diamétralement opposé à la potence, qui permet d'empêcher l'arrachement intempestif de l'anneau par traction sur la connexion. potence, qui permet d'empêcher l'arrachement intempestif de l'anneau par traction sur la connexion.

De préférence, un espace ou jeu est prévu de part et d'autre entre les faces de l'anneau et les parties en vis-à-vis de la butée et du corps, pour faciliter le moulage. Au moins un pont de matière sécable, par exemple sous forme d'une pyramide, peut être moulé dans cet espace entre les faces de l'anneau et les parties en vis-à-vis de la butée et du corps, de façon à maintenir la position de l'anneau et le guider en dépit du jeu.

Les moyens élastiques de rappel de l'anneau comprennent avantageusement un élément élastique interposé entre une partie de la potence et le corps et/ou entre l'anneau et le bras de la butée, cet élément étant dans une forme de réalisation un bloc de matériau élastique, de préférence une matière élastomère (thermoplastique élastomère ou caoutchouc). Celui-ci est de préférence réalisé par surmoulage de façon à éviter d'avoir des pièces rapportées à assembler.

Pour la même raison, il est avantageux que le ou les joints d'étanchéité soient réalisés par surmoulage de matière élastomère.

Le thermoplastique du corps est avantageusement un polyamide (PA) du type PA 12 ou PA 6.12, éventuellement additionné de fibres de verre. L'élastomère est avantageusement une formulation de caoutchouc à base de caoutchoucs FPM, FKM (fluorocarbonés), XNBR (nitrile carboxylé) ou HNBR (nitrile hydrogéné).

Le moulage du corps de raccord et le surmoulage des blocs élastiques et des joints d'étanchéité est avantageusement réalisé sur une presse bi-matière en une ou plusieurs phases d'injection, de façon à obtenir une pièce finie en sortie de presse à injecter. On évite ainsi totalement l'assemblage de plusieurs éléments, ce qui simplifie le contrôle de qualité et facilite la gestion des stocks.

Les techniques d'injection bi-matière sont bien connues en elles-mêmes. On peut notamment utiliser :
- une presse bi-matière composée d'un système d'injection pour thermoplastique et d'un système d'injection pour élastomère. L'outillage peut être rotatif, ou à tiroir (pas d'ouverture intermédiaire ni de transfert des pièces) ou à plateaux amovibles (pièces thermoplastiques éjectées sur un plateau indexé puis tourné) mono ou multi-empreintes.
- une presse thermoplastique et une presse élastomère séparée, assistées d'un bras manipulateur pour le transfert des pièces d'une machine à l'autre.

L'amenée de l'élastomère peut être réalisée par le biais de canaux préalablement moulés dans la forme du corps thermoplastique, et/ou par une ou des ouvertures latérales sur le corps.

Entre la phase d'injection du thermoplastique et celle d'injection de l'élastomère, on applique s'il y a lieu un agent d'adhérence (par pulvérisation par exemple), afin de solidariser l'élastomère au thermoplastique. On peut aussi réaliser sans agent d'adhérence une solidarisation chimique par interdiffusion de l'élastomère et du thermoplastique à l'interface en choisissant certains couples appropriés de matériaux, par exemple selon la technologie connue sous le nom de K&K mise au point par la société HÜLS AG (on pourra se référer entre autres au brevet EP 0 344 427 A); le thermoplastique est par exemple un polyamide 6.12 (tel que les Vestamid X 7094 de Hüls) et l'élastomère une formulation à base de FPM, XNBR ou HNBR.

L'invention sera mieux comprise à l'aide de la description qui suit, en référence aux dessins schématiques annexés représentant à titre d'exemple des formes de réalisation du raccord conforme à l'invention. D'autres avantages et caractéristiques seront mis en évidence à la lecture de la description.

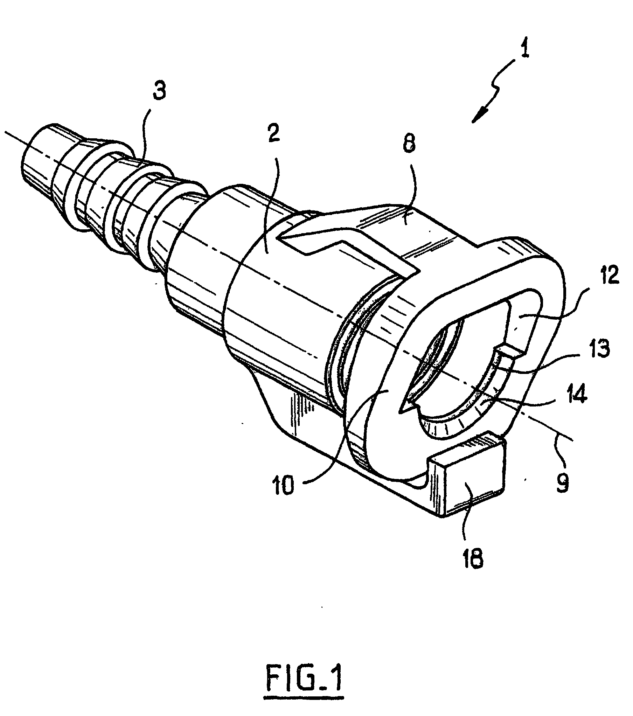

La figure 1 est une vue en perspective d'un raccord conforme à l'invention, avant surmoulage des éléments élastomères.

La figure 2 est une vue de dessus du raccord de la figure 1.

La figure 3 est une vue en coupe A-A du raccord de la figure 2.

La figure 4 est une vue arrière du raccord de la figure 1.

La figure 5 est une vue partielle analogue à la figure 3, après surmoulage de blocs élastiques et d'un joint d'étanchéité.

Les figures 6 à 10 sont des vues analogues à la figure 3 de variantes de réalisation de l'invention

Le raccord 1 comprend un corps cylindrique 2 prolongé par une queue cannelée 3, dite sapin. Le corps 2 comporte une cavité cylindrique à gradins comportant une première section, d'extrémité, 4 de grand diamètre à l'ouverture 7 du corps, suivi d'une section intermédiaire 5 de diamètre plus petit, et d'une section terminale 6 de petit diamètre se prolongeant dans la queue 3.

Une potence 8 part de la surface du corps 2 avec un bras sensiblement parallèle à l'axe 9 du raccord, et dirigé vers l'arrière de façon à y maintenir, transversalement audit axe 9, un anneau 10 de verrou venu de moulage avec le corps. L'anneau 10 comporte une ouverture dont la partie haute est assez large et dont la partie basse forme à l'avant une lèvre d'accrochage 13 et à l'arrière une pente d'accueil 14 conique. L'anneau 10 est d'épaisseur décroissante de haut en bas, le plan de sa face 15 en vis-à-vis de l'ouverture 7 du corps étant parallèle à cette ouverture, tandis que le plan 16 de sa face d'entrée est oblique, sauf éventuellement au niveau de la partie basse de l'anneau 10 dont les deux faces sont avantageusement parallèles à l'ouverture 7 du corps.

A la base du corps, un bras 17 diamétralement opposé au bras de la potence 8, porte à son extrémité arrière une butée en forme de crochet 18 relevé vers le haut un peu au-dessus du bas de l'anneau 10, qui empêche l'arrachement de l'anneau 10 vers l'arrière en cas de traction exercée sur la collerette de la pièce mâle encliquetée. Le dimensionnement du bras et du crochet est prévu pour assurer leur rigidité. Afin de faciliter le moulage et le démoulage de ces pièces, il est prévu entre la face 15 de l'anneau 10 et le corps 2 d'une part, entre la face 16 de l'anneau et la butée 18 d'autre part, un jeu libre d'environ 1,5 mm. Le cas échéant, on peut prévoir de placer ponctuellement un pont de matière dans ces espaces, par exemple sous forme d'une pyramide 19 de matière dont le sommet 20 peut être facilement rompu lors du démoulage de la pièce. Les deux pyramides 19 servent à guider la partie inférieure de l'anneau 10 sur ses deux faces pendant son débattement lors du montage ou du démontage du raccord.

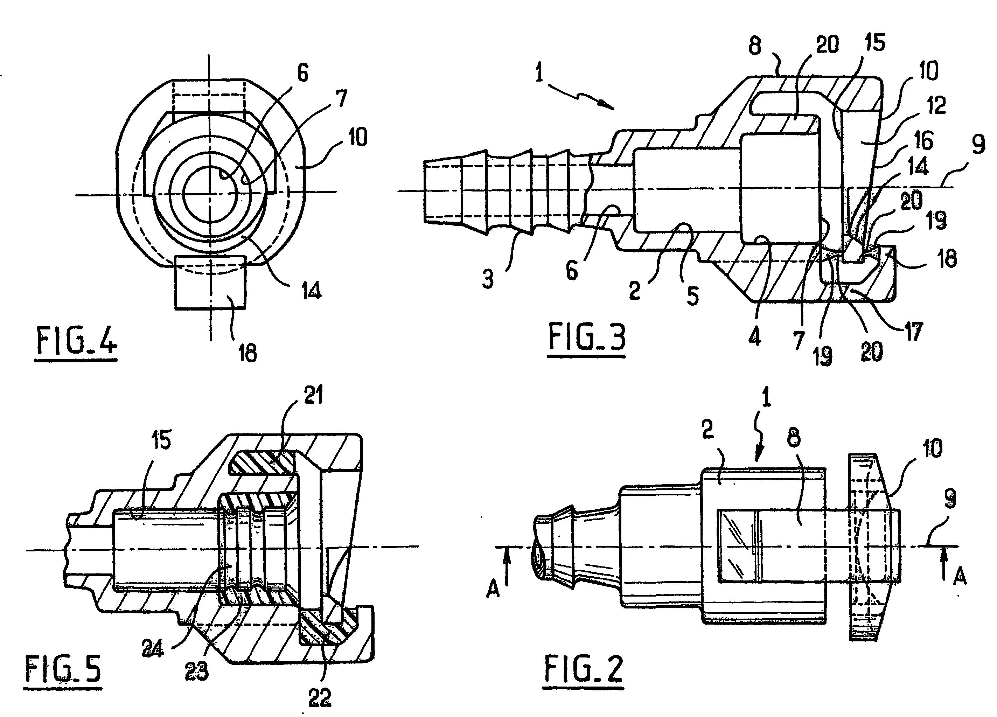

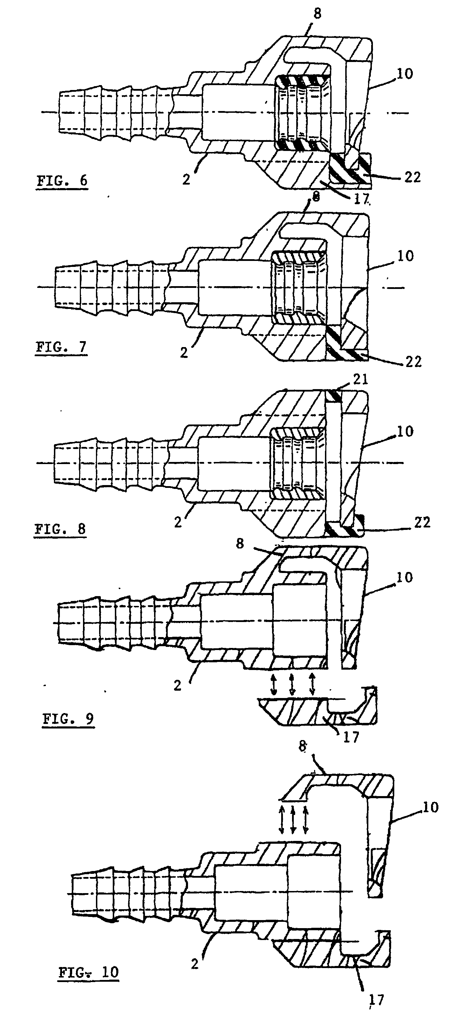

L'anneau 10 est représenté sur la figure 3 dans sa position excentrée de repos et de blocage. Il passe dans sa position centrée, dans laquelle il permet le libre passage de la collerette, par translation vers le bas, celle-ci résultant soit de l'appui de l'opérateur sur la potence 8 (pour le démontage notamment), soit de la composante verticale de force exercée par la collerette elle-même sur la rampe d'accueil 14 (pendant le montage). Le retour à la position de repos excentrée est assuré par l'élasticité de la potence et/ou par des moyens accessoires. Ceux-ci peuvent consister en des organes élastiques prévus notamment entre le bras 8 et la paroi 20 du corps en regard, et/ou entre le bas de l'anneau 10 et la butée 18 ou son bras 17. Les moyens accessoires peuvent consister en pattes élastiques (venues de moulage notamment) ou autres moyens connus de l'art; mais avantageusement, ils sont constitués par des blocs compressibles en matière élastique élastomère, de préférence réalisés directement par surmoulage sur le corps du raccord. La figure 5 montre de tels blocs 21 et 22. Il est à noter que le bloc inférieur 22, outre sa fonction d'amplificateur de l'effet ressort, peut jouer un rôle semblable à celui des ponts de matière sécable 19,20 (pyramides) et les remplacer, à savoir maintenir la position de l'anneau 10 dans le sens de l'axe 9 du raccord et le guider transversalement.

L'étanchéité est réalisée par un joint annulaire 23 à nervures intérieures 24 disposé dans tout ou partie de la section 4 du corps 2 et avantageusement surmoulé. Le diamètre intérieur du joint 23, hors nervures, est égal ou très voisin (de préférence légèrement inférieur pour permettre un léger serrage) de celui de la section 5, c'est-à-dire sensiblement le diamètre extérieur du canon d'embout qui doit y pénétrer, tandis que la collerette reste à l'arrière du joint, et de préférence dans l'espace compris entre l'ouverture 7 du corps 2 et la face 15 de l'anneau 10.

Différentes variantes de réalisation peuvent être envisagées et les figures 6 à 10 en illustrent dix.

Dans la figure 6, le crochet 18 de même matière que le corps 2 a été supprimé, le bloc élastique 22, surmoulé sur le bras 17, jouant le rôle de crochet grâce à sa forme. Dans la figure 7, on a aussi supprimé le bras 17, et le bloc 22 ne joue plus le rôle de crochet mais simplement d'appui opposé à la potence 8 de l'anneau 10.

Dans la figure 8, non seulement le bloc 22 est surmoulé directement sur le corps 2, sans bras 17, mais l'anneau 10 est également solidarisé au corps par l'intermédiaire d'un bloc supérieur surmoulé 21 qui joue à la fois le rôle de la potence 8 et le rôle du bloc supérieur 21 de la figure 5.

Dans les trois modes de réalisation précédents, on obtient lors du surmoulage du bloc élastomère, avantageusement effectué selon la technologie mentionnée plus haut, une liaison chimique entre les parties thermoplastiques qui garantit une adhésion correcte, et donc une tenue à l'arrachement suffisante de l'embout mâle dans le raccord encliquetable.

Dans les modes de réalisation des figures 9 et 10, on a prévu de souder (par exemple par ultrasons ou par friction) soit le bras 17 de la butée à crochet (figure 9) soit la potence 8 de l'anneau 10 (figure 10).

## Revendications

1. Raccord encliquetable femelle (1) destiné à coopérer avec un embout d'accrochage mâle du type à canon central et collerette, le raccord comportant un corps (2) à cavité cylindrique (4, 5, 6) à gradins destinée à recevoir au moins l'extrémité du canon et un verrou élastique destiné à venir bloquer l'arrière de la collerette une fois que celle-ci est en place, ainsi qu'au moins un joint annulaire (23) assurant l'étanchéité, le verrou étant constitué d'un anneau (10) sensiblement indéformable à débattement radial entre une position, excentrée, de blocage et une position, centrée, d'escamotage, des moyens élastiques permettant le rappel de l'anneau (10) de la position escamotée à sa position excentrée, ces moyens comprenant une potence déformable (8) qui maintient l'anneau (10) transversalement à l'arrière du corps et permet son débattement radial entre ses deux positions, **caractérisé en ce que** l'anneau (10) et le corps (2) sont monobloc et que le corps comprend, également d'une pièce, une butée à crochet (18) pour l'anneau (10), maintenue à l'arrière du corps par un bras (17) diamétralement opposé à la potence (8).

2. Raccord selon la revendication 1, **caractérisé en ce qu'**un espace est prévu entre les faces de l'anneau (10) et les parties en vis-à-vis de la butée (18) et du corps (2), au moins un pont (19, 20) sécable étant prévu le cas échéant dans cet espace entre les faces de l'anneau (10), et les parties en vis-à-vis de la butée et du corps.

3. Raccord selon l'une quelconque des revendications 1 ou 2, **caractérisé en ce que** les moyens élastiques de rappel de l'anneau (10) comprennent un élément élastique (21, 22) interposé entre une partie de la potence (8) et le corps (2) et/ou entre l'anneau (10) et le bras de la butée (18).

4. Raccord selon la revendication 3, **caractérisé en ce que** l'élément élastique (21, 22) est un bloc de matériau élastique.

5. Raccord selon la revendication 4, **caractérisé en ce que** le bloc élastique (21, 22) est réalisé par surmoulage.

6. Raccord selon l'une quelconque des revendications 1 à 5, **caractérisé en ce que** le joint d'étanchéité (23) est réalisé par surmoulage.

7. Raccord selon l'une quelconque des revendications 5 ou 6, **caractérisé en ce que** le moulage de thermoplastique et le surmoulage d'élastomère sont réalisés par une technique d'injection bi-matière.

8. Raccord selon la revendication 7, **caractérisé en ce que** le couple thermoplastique-élastomère est choisi parmi ceux qui permettent une liaison chimique à l'interface lors du surmoulage.

9. Raccord selon l'une quelconque des revendications précédentes, **caractérisé en ce que** l'anneau (10) et le corps (2) sont moulés en une seule pièce.

## Claims

1. Female snap-on coupling (1) intended to cooperate with a male capture fitting of the type having a central barrel and collar, the coupling having a body (2) with a stepped eplindrical cavity (4, 5, 6) intended to receive at least the end of the barrel and an elastic lock intended to immobilise the rear of the collar once this collar is in place, as well as at least one annular sealing gasket (23), the lock being formed by a substantially indeformable ring (10) with radial deflection between an eccentric, immobilising position and a centred, retraction position of the elastic means permitting the ring (10) to be returned from the retraction position to its eccentric position, these means comprising a deformable bracket (8) which holds the ring (10) transversely behind the body and allows it to deflect radially between its two positions, **characterised in that** the ring (10) and the body (2) form one piece and that the body has, also in one piece therewith, a hooked stop (18) for the ring (10), held at the rear of the body by an arm (17) diametrically opposite the bracket (8).

2. Coupling as claimed in claim 1, **characterised in that** a space is provided between the faces of the ring (10) and the facing parts of the stop (18) and of the body (2), at least one cleavable bridge (19, 20) being provided as appropriate in this space between the faces of the ring (10) and the facing parts of the stop and of the body.

3. Coupling as claimed in any one of claims 1 or 2, **characterised in that** the elastic return means of the ring (10) have an elastic element (21,22) interposed between a part of the bracket (8) and the body (2) and/or between the ring (10) and the arm of the stop (18).

4. Coupling as claimed in claim 3, **characterised in that** the elastic element (21, 22) is a block of elastic material.

5. Coupling as claimed in claim 4, **characterised in that** the elastic block (21, 22) is produced by over-moulding.

6. Coupling as claimed in any one of claims 1 to 5, **characterised in that** the sealing gasket (23) is produced by over-moulding.

7. Coupling as claimed in any one of claims 5 or 6, **characterised in that** the moulding of thermoplastic material and the over-moulding of elastomer are carried out by a two-material injection technique.

8. Coupling as claimed in claim 7, **characterised in that** the thermoplastic-elastomer pairing is selected from those which permit a chemical bond at the interface during over-moulding.

9. Coupling as claimed in any one of the preceding claims, **characterised in that** the ring (10) and the body (2) are moulded as one piece.

## Patentansprüche

1. Kupplungsschnellverschluß-Muffenteil (1) zur Zusammenwirkung mit einem Kupplungssteckteil mit einer zentralen Hülse und einem Flansch, wobei das Muffenteil ein Gehäuse (2) mit einem zylindrischen, abgestuften Hohlraum (4, 5, 6) zur Aufnahme wenigstens des Endes der Hülse und einen elastischen Verschluß zum arretieren des hinteren Teils des Flansches aufweist, sobald sich dieser am Einsatzort befindet, ebenso wie wenigstens eine Ringdichtung (23) zum Abdichten, wobei der Verschluß aus einem im wesentlichen unverformbaren, zwischen einer exzentrischen Arretierposition und einer zentrischen Einrückposition radial verstellbarem Ring besteht, und elastische Mittel, die die Zurückstellung des Rings (10) aus seiner Einrückposition in seine exzentrische Position ermöglichen, die einen verformbaren Vorsprung (8) aufweisen, der den Ring (1) transversal am hinteren Teil des Gehäuses hält und seine radiale Verstellung zwischen seinen beiden Positionen ermöglicht,
**dadurch gekennzeichnet, daß**
der Ring (10) und das Gehäuse (2) einstückig sind, und daß das Gehäuse ebenfalls einstückig einen hakenförmigen Anschlag (18) für den Ring (10) aufweist, der am hinteren Teil des Gehäuses durch einen zum Vorsprung (8) diametral gegenüberliegenden Arm (17) gehalten ist.

2. Muffenteil nach Anspruch 1,
**dadurch gekennzeichnet, daß**
ein Zwischenraum zwischen den Stirnseiten des Rings (10) und den gegenüberliegenden Teilen des Anschlags (18) und des Gehäuses (2) vorgesehen ist, wobei wenigstens ein durchtrennbares Verbindungsstück (19, 20) gegebenenfalls in diesem Zwischenraum zwischen den Stirnseiten des Rings (10) den gegenüberliegenden Teilen des Anschlags und des Gehäuses vorgesehen ist.

3. Muffenteil nach Anspruch 1 oder 2,
**dadurch gekennzeichnet, daß**
die elastischen Rückstellmittel des Rings (10) ein elastisches Element (21, 22) aufweisen, das zwischen einem Abschnitt des Vorsprungs (8) und dem Gehäuse (2) und/oder dem Ring (10) und dem Arm des Anschlags (18) angeordnet ist.

4. Muffenteil nach Anspruch 3,
**dadurch gekennzeichnet, daß**
das elastische Element (21, 22) ein Block aus elastischem Material ist.

5. Muffenteil nach Anspruch 4,
**dadurch gekennzeichnet, daß**
der elastische Block (21, 22) durch Gießen hergestellt ist.

6. Muffenteil nach einem der Ansprüche 1 bis 5
**dadurch gekennzeichnet, daß**
der Dichtring (23) durch Gießen hergestellt ist.

7. Muffenteil nach Anspruch 5 oder 6,
**dadurch gekennzeichnet, daß**
der thermoplastische Formvorgang und der elastomere Gießvorgang durch eine Zweimaterial-Spritzgußtechnik durchgeführt wird.

8. Muffenteil nach Anspruch 7,
**dadurch gekennzeichnet, daß**
das thermoplastisch-elastomere Materialpaar aus denjenigen ausgewählt ist, die an der Grenzfläche beim Gießen eine chemische Verbindung ermöglichen.

9. Muffenteil nach einem der vorhergehenden Ansprüche,
**dadurch gekennzeichnet, daß**
der Ring (10) und das Gehäuse (2) einstückig geformt sind.
